# EUROPEAN PATENT SPECIFICATION

(11) **EP 2 284 931 B1**
(45) Date of publication and mention of the grant of the patent: **04.01.2012**
(21) Application number: 10172351.8
(22) Date of filing: 10.08.2010
(51) Int. Cl.: H01M 2/22, H01M 2/34, H01M 6/50, H01M 10/50

(54) **Battery pack**
Batteriepack
Bloc-batterie

(30) Priority: 12.08.2009 US 272063 P
(43) Date of publication of application: 16.02.2011
(73) Proprietor: Samsung SDI Co., Ltd., Yongin-si, Gyeonggi-do (KR)
(72) Inventor: Kim, Hyeongsin, Gyeonggi-do (KR); Jang, Youngcheol, Gyeonggi-do (KR)
(74) Representative: Rasch, Dorit

(56) References cited:
- US-A1- 2003 157 399
- US-A1- 2003 185 278
- US-A1- 2005 112 456
- US-A1- 2005 156 574

## Description

### Background of the Invention

### 1. Field of the invention

The present invention relates to a battery pack.

### 2. Description of the Related Art

Generally, battery packs indudes a rechargeable battery cell and a protective circuit module for preventing the battery cell from being overcharged or overdischarged. Lithium ion batteries or lithium polymer batteries are now used as the battery cell. The protective circuit module indudes a plurality of circuit devices for preventing the battery cell from being overcharged or overdischarged.

The lithium polymer batteries may be classified into an absolute solid type lithium polymer battery containing no organic electrolyte and a lithium ion polymer battery using a gel type polymer electrolyte containing an organic electrolyte.

In case of the lithium ion polymer battery, the leaking of the electrolyte is very low or does not occur when compared to the lithium ion battery using a liquid electrolyte. Thus, a pouch induding a metal foil and an insulating layer instead of a metal can may be used as a battery sheath in the lithium ion polymer battery.

A battery with a protective circuit module is known from US 2005/0156574.

### Brief Summary of the Invention

The present invention is directed to a battery pack in which heat generated from a battery cell, a cell tab, and an internal terminal is quickly transferred to a positive temperature coefficient (PTC) device to quickly interrupt current when the battery cell is exposed to high temperature.

According to the present invention, there is provided a battery pack as defined in claim 1.

The heat transfer member may be a thermally conductive tape, in particular the heat transfer member may be a thermally conductive adhesive tape. A backside of the thermally conductive adhesive tape may be covered by an adiabatic insulating layer. The heat transfer member may comprise ceramic particles, pressure sensitive acrylics, and/or a flame retardant. The heat transfer member may comprise: a heat conductive layer, a first adhesive layer disposed between the heat conductive layer and the cell tab; and a second adhesive layer disposed on the heat conductive layer on a side opposite the first adhesive layer. The internal terminal may extend beyond the edges of the cell tab, and the heat transfer member may contact the cell tab, the internal terminal, and a protection layer of the protective circuit module.

The heat transfer member may contact the cell tab, the internal terminal, the PTC device, and a protection layer of the protective circuit module.

The heat transfer member may contact an interconnection pattern of the protective circuit module adjacent to the internal terminal, the cell tab and the PTC device.

The internal terminal may extend beyond at least an edge of the cell tab, and the heat transfer member may contact the cell tab, the internal terminal, the PTC device, and an interconnection pattern of the protective circuit module adjacent to the cell tab, the internal terminal, and the PTC device.

The battery pack may further indude a frame case being formed of a resin and surrounding the battery cell. The frame case maybe coupled to the protective circuit module such that there remains a space between the protective circuit board and the frame case, wherein the internal terminal , the cell tab, the PTC device and the heat transfer member are provided within the space.

The protective circuit module may transfer heat from the battery cell to the PTC device.

In the battery pack according to the embodiments, the heat generated in the battery cell, the cell tab, and the internal terminal is quickly transferred to the PTC device through the heat transfer member to quickly interrupt current when the battery cell is exposed to high temperature. Therefore, the battery pack according to the embodiments may have the improved stability and reliability.

### Brief Description of the Drawings

The features and advantages of the present invention will be more apparent from the following detailed description in conjunction with the accompanying drawings, in which:
FIG. 1A illustrates an assembled perspective view of a battery pack according to an embodiment, and FIG. 2B illustrates an exploded perspective view;
FIG. 2 illustrates a rear perspective view of a protective circuit module of a battery pack according to an embodiment;
FIG. 3A illustrates a perspective view of a state in which a battery cell and a protective circuit module are electrically connected to each other in a battery pack according to an embodiment, and FIG. 3B illustrates an enlarged perspective view of a region 3 of FIG. 3A;
FIG. 4A illustrates a partially enlarged perspective view of a state in which a heat transfer member is attached to a cell tab and a positive temperature coefficient (PTC) device in a battery pack according to an embodiment, and FIG. 4B illustrates a sectional view taken along line 4-4 of FIG. 4A;
FIG. 5 illustrates a sectional view of an attachment state of a heat transfer member according to another embodiment;
FIG. 6 illustrates a sectional view of an attachment state of a heat transfer member according to another embodiments
FIG. 7 illustrates a sectional view of an attachment state of a heat transfer member according to another embodiment; and
FIG. 8 illustrates a sectional view of an attachment state of a heat transfer member according to another embodiment

### DETAILED DESCRIPTION OF THE PREFERRED EMBODIMENTS

Now, preferred embodiments of the present invention will be described in more detail with reference to the accompanying drawings, such that those skilled in the art can easily practice the present invention.

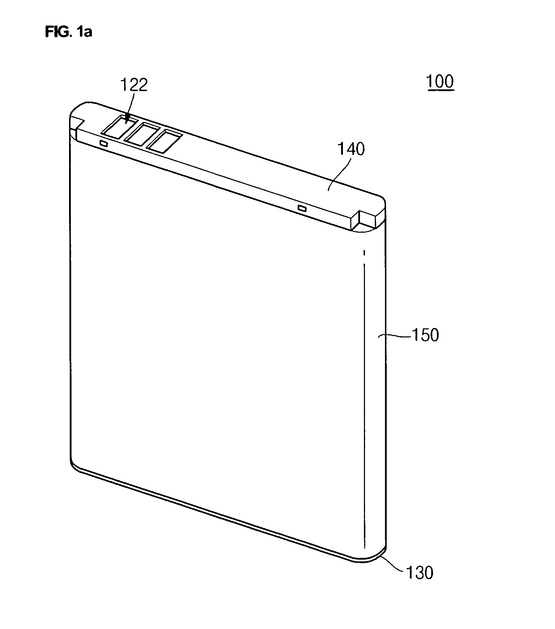

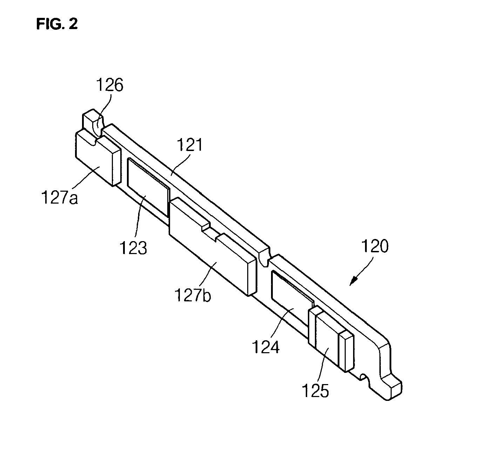

FIG. 1A illustrates an assembled perspective view of a battery pack according to an embodiment, and FIG. 2B illustrates an exploded perspective view.

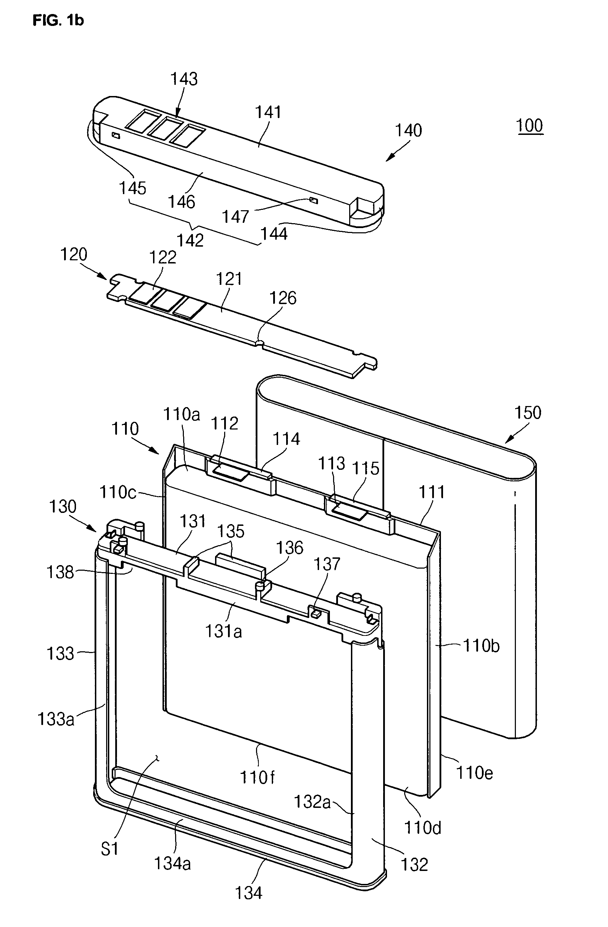

Referring to FIGS.1A and 1B, a battery pack 100 according to an embodiment indudes a battery cell 110, a protective circuit module 120, a frame case 130, a cover 140, and a label 150.

An electric charge is stored in or discharged from the battery cell 110. The battery cell 110 is classified into a can type battery cell and a pouch type battery cell according to the material of a case surrounding an electrode assembly. The pouch type battery cell will be described in this embodiment as example.

The battery cell 110 indudes an electrode assembly (not shown), cell tabs 112 and 113, and a pouch case 111. The electrode assembly indudes a positive electrode, a negative electrode, and a separator disposed between the positive electrode and the negative electrode. The cell tabs 112 and 113 are connected to the positive electrode and the negative electrode of the electrode assembly, respectively. The pouch case 111 receives the electrode assembly to expose the cell tabs 112 and 113 to the outside. Here, insulating tapes 114 and 115 for preventing the electrode tabs 112 and 113 from electrically short-circuiting to the pouch case 111 may be further disposed on the cell tabs 112 and 113, respectively.

The battery cell 110 may have a top surface 110a, a pair of short side surfaces 110b and 110c, a pair of long side surfaces 110d and 110e, and a bottom surface 110f. The circuit module 120 is disposed on the top surface 110a. The pair of short side surfaces 110b and 110c and the pair of long side surfaces 110d and I 1 0e are connected to the top surface 110a. The bottom surface 110f faces the top surface 110a and is connected to the side surfaces 110b, 110c, 110d, and 110e. Here, the pair of short side surfaces 110b and 110c denotes side surfaces having a relatively narrow width among the side surfaces 110b, 110c, 110d, and 110e connected to the top surface 110a of the battery cell 110. The pair of long side surfaces 110d and 110e denotes side surfaces having a relatively wide width among the side surfaces 110b, 110c, 110d, and 110e of the battery cell 110.

The protective circuit module 120 is disposed on the top surface 110a of the battery cell 110 and electrically connected to the battery cell 110 to control the charging and discharging of the battery cell 110. The protective circuit module 120 may indude a circuit board 121, external terminals 122, internal terminals (not shown), a positive temperature coefficient (PTC) device (not shown), and a coupling groove 126.

The external terminals 122 are disposed on a top surface of the circuit board 121 to electrically connect the circuit board 121 to an external electric device (not shown). The coupling groove 126 is defined in an outer circumference of a long side of the circuit board 121 to physically couple the protective circuit module 120 to the frame case 130. The protective circuit module 120 will be described below in detail.

The frame case 130 surrounds the battery cell 110 between the battery cell 110 and the protective module 120 and is physically coupled to the protective circuit module 120. The frame case 130 covers the top surface 110a, the bottom surface 110f, and the pair of short side surfaces 110b and 110c of the battery cell 110, respectively. Also, the frame case 130 exposes the pair of long side surfaces 110d and 110e of the battery cell 110 to the outside and covers lateral edge portions of the pair of long side surfaces 110d and 11 due. Thus, the frame case 130 has a receiving space S1 of the battery cell 110.

Specifically, the frame case 130 indudes planar parts 131, 132, 133, and 134 and extension surfaces 131 a, 132a, 133a, and 134a. The planar parts 131, 132, 133, and 134 cover the top surface 110a, the pair of short side surfaces 110b and 110c, and the bottom surface 110f. The extension surfaces 131 a, 132a, 133a, and 134a are bent from end portions of the planar parts 131, 132, 133, and 134 parallel to edge portions of the pair of long side surfaces 110d and 110e of the battery cell 110 and extends toward the long side surfaces 110d and 110e of the battery cell 110 to cover the edge portions of the pair of long side surfaces 110d and 110e of the battery cell 110.

The frame case 130 may indude a support part 135 disposed on the planar part 131, a coupling protrusion 136, and a rib 137.

Each support part 135 protrudes from an edge and a middle region of the planar part 131 toward the protective circuit module 120. The support part 135 supports the protective circuit module 120 when the protective circuit module 120 is disposed above the planar part 131 to provide a space between the planar part 131 and the protective circuit module 120. The cell tabs 112 and 113, the internal terminals (not shown), and the positive temperature coefficient (PTC) device (not shown) are disposed in the space.

The coupling protrusion 136 protrudes from the support part 135 corresponding to the coupling groove 126 of the protective circuit module 120 toward the protective circuit module 120. The coupling protrusion 136 is inserted into the coupling groove 126 to physically couple the protective circuit module 120 to the frame case 130.

The rib 137 protrudes from a lateral surface of the support part 135. The rib 137 is inserted into a rib coupling hole, which will be described later, of the cover 140 to physically couple the frame case 130 to the cover 140.

The frame case 130 induding the above-described components may be integrally formed by an injection molding process. The frame case 130 may be formed of one of polycarbonate (PC), polyethylene terephthalate glycol (PETG), polyethylene (PE), polypropylene (PP), and acronitrile-butadiene-styren (ABS). The cover 140 is coupled to an upper portion of the battery cell 110 to receive the protective circuit module 120 in an inner space thereof. The cover 140 indudes a cover plate 141 and a sidewall 162 extending from the cover plate 141 toward the protective circuit module 120.

The cover plate 141 may have a shape approximately similar to that of the circuit board 121. An inner surface of the cover plate 141 facingly contacts the top surface of the circuit board 121. Through holes 143 are defined in a region of the cover plate 141 corresponding to the external terminals 122. The through holes 143 expose the external terminals 122 to the outside to electrically connect the battery pack 100 to an external electric device (not shown).

The side wall 162 indude both end parts 144 and 145 disposed on both ends of a longitudinal direction of the cover 140 and connexion parts 146 connecting the end part 144 to the end part 145. Here, the both end parts 144 and 145 and portions of the connection parts 146 are covered by the label 150.

Also, the side wall 162 may include a rib coupling hole 147 protrudingly defined from a region of the respective connection parts 146 corresponding to the rib 137 of the frame case 130. The rib 137 of the frame case 130 is inserted into the rib coupling hole 147 to physically couple the frame case 130 to the cover 140.

The label 150 is surroundingly attached to the side surfaces 110b, 110c, 110d, and 110e of the battery cell 110. The label 150 covers portions of the both end parts 144 and 145 of the cover 140 and portions of the connection parts 146. The label 150 may improve coupling between the battery cell 110, the frame case 130, and the cover 140.

FIG. 2 illustrates a rear perspective view of a protective circuit module of a battery pack according to an embodiment.

Referring to FIG. 2, a circuit board 121 of a protective circuit module 120 is mainly provided with an insulating layer. The circuit board 121 indudes a circuit 127a for detecting a charge voltage, a discharge voltage, and a current of a battery cell 110 and a switch 127b for interrupting a current when an overcharge voltage, an overdischarge voltage, or an overcurrent condition is detected.

Internal terminals 123 and 124 are disposed on the circuit board 121 toward the battery cell 110. The internal terminals 123 and 124 are electrically connected to cell tabs of the battery cell 110 by direct welding. Here, the internal terminal 123 and the cell tab may be electrically connected to a positive interconnection pattern (not shown), and the internal terminal 124 and the cell tab may be electrically connected to a negative interconnection pattern (not shown) of the protective circuit module 120 via a positive temperature coefficient (PTC) device 125.

The PTC device 125 is mounted on the circuit board 121. The PTC device 125 is electrically connected to the internal terminal 124 to interrupt a current when a temperature of the battery cell 110 is beyond its allowable temperature, thereby preventing abnormal behavior due to overheating of the battery cell from occurring. Here, the PTC device 125 may be connected to the internal terminal 123 instead of the internal terminal 124.

Moreover, the PTC device 125 has room temperature resistance of several hundred ohms and an operation temperature of about 75°C to about 120°C. The PTC device 125 may indude a chip PTC thermister that can be surface mounted on the circuit board 121, but is not limited thereto.

Although being described below in detail, a heat transfer member (not shown) is integrally attached to the cell tab, the internal terminal 124, and the PTC device 125 to more quickly transfer heat generated in the cell tab and the internal terminal 124 to the PTC device 125.

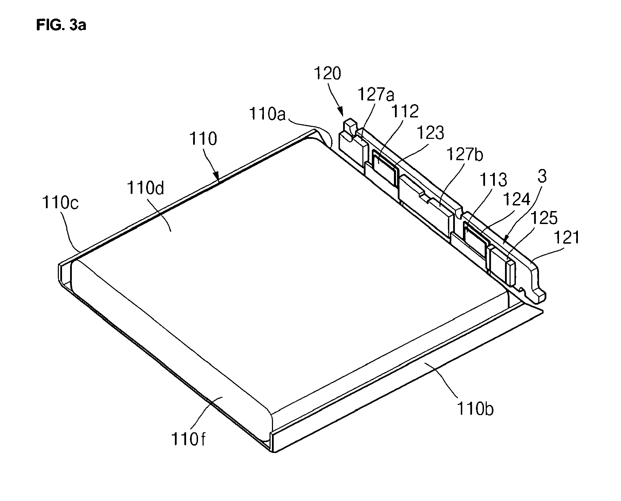

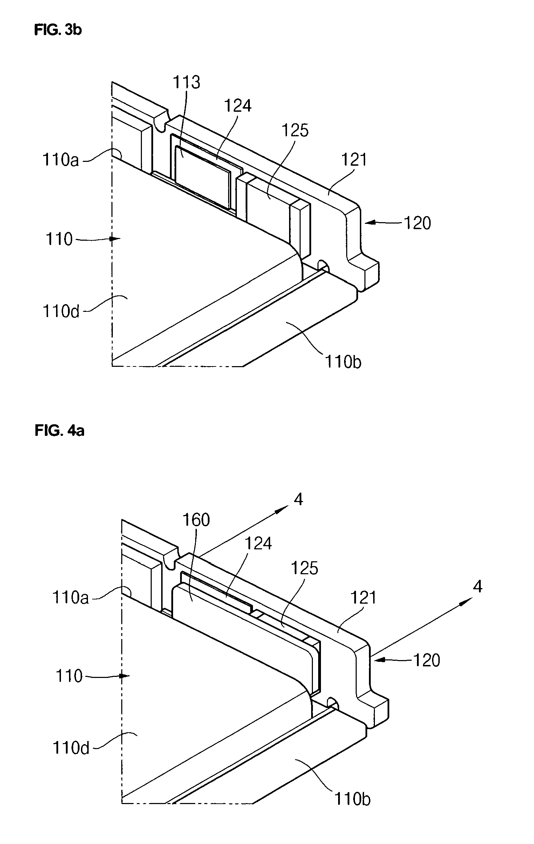

FIG. 3A illustrates a perspective view of a state in which a battery cell and a protective circuit module are etectrica!!y connected to each other in a battery pack according to an embodiment, and FIG. 3B illustrates an enlarged perspective view of a region 3 of FIG. 3A.

Referring to FIGS. 3A and 3B, a cell tab 112 of a battery cell 110 is connected to an internal terminal 123 disposed on a circuit board 121 of a protective circuit module 120. For example, the cell tab 112 may be connected to the internal terminal 123 by ultrasonic welding, resistance welding, or laser welding. Also, a cell tab 113 of the battery cell 110 is connected to an internal terminal 124 disposed on the circuit board 121 of the protective circuit module 120. Here, the connection process is performed using the same method as the above-described method.

Since a PTC device 125 is electrically connected to the internal terminal 124, and the internal terminal 124 is electrically connected to the cell tab 113, the PTC device 125 is electrically connected to the cell tab 113.

Here, although not shown in FIGS. 3A and 3B, a planar part (see reference numeral 131 of FIG. 1B) of a frame case 130 is disposed between the battery cell 110 and the protective circuit module 120. Since the frame case 130 is formed of a resin having a low thermal conductivity, heat of the battery cell 110 is not quickly transferred to the PTC device 125. Thus, when a temperature of the battery cell 110 is beyond its allowable temperature, the PTC device 125 may not be quickly operated.

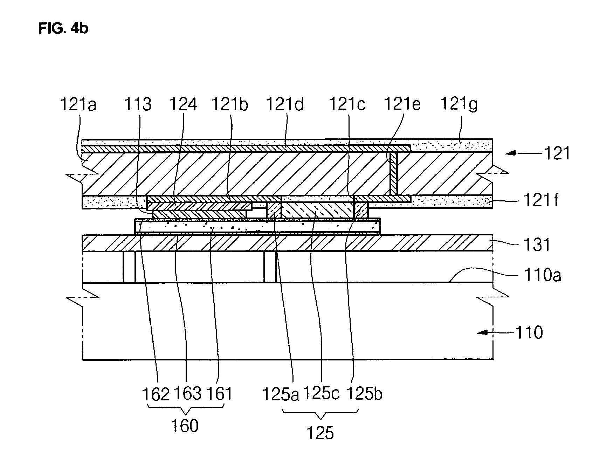

FIG. 4A illustrates a partially enlarged perspective view of a state in which a heat transfer member is attached to a cell tab and a positive temperature coefficient (PTC) device in a battery pack according to an embodiment, and FIG. 4B illustrates a sectional view taken along line 4-4 of FIG. 4A Here, for convenience of comprehension, a frame case is not illustrated in FIG. 4A, and a planar part 131 of the frame case is illustrated in FIG. 4B.

Referring to FIGS. 4A and 4B, a cell tab 113 is connected to an internal terminal 124, and a heat transfer member 160 having an integrated plate shape is attached to the cell tab 113 and the PTC device 125. When a current flows from the cell tab 113 to the internal terminal 124 or from the internal terminal 124 to the cell tab 113, a relative large contact resistance occurs in a contact region of the cell tab 113 and the internal terminal 124. As a result, a large amount of heat is generated in the contact region. Specifically, when an overcurrent flows to generate heat in the battery cell 110, the cell tab 113 and the internal terminal 124 generate a large amount of heat. In this case, the heat generated in the cell tab 113 and the internal terminal 124 is quickly and directly transferred to the PTC device 125 through the heat transfer member 160. Thus, although the planer part 131 having a poor thermal conductivity is disposed between the battery cell 110 and the PTC device 125, the PTC device 125 may be quickly operated because the heat generated in the cell tab 113 and the internal terminal 124 is directly transferred to the PTC device 125 through the heat transfer member 160. That is, when the battery cell is overheated, the current is quickly interrupted. Thus, the stability and reliability of the battery cell 110 are further improved. Moreover, one surface of the heat transfer member 160 may be attached or closely adhere to the cell tab 113, the internal terminal 124, and the PTC device 125, and the other surface of the heat transfer member 160 may closely adhere to or be spaced from the planar part 131 of the frame case. The heat transfer member 160 may closely adhere to the planar part 131 of the frame case to improve thermosensitive with respect to the battery cell 110.

Referring to FIG. 4B, the circuit board 121 indudes an insulating layer 121a having a plate shape, interconnection patterns 121b, 121c, and 121d disposed on a surface of the insulating layer 121a, a conductive via 121e electrically connecting the interconnection pattern 121c to the interconnection pattern 121d, and a protection layers 121f and 121g covering the interconnection patterns 121b, 121c, and 121d. Here, although the double-layered circuit board 121 is described as example, but is not limited thereto. For example, the circuit board 121 may have a multi-layered structure.

The internal terminal 124 is connected to the interconnection pattern 121b. Also, the cell tab 113 is connected to the internal terminal 124. The PTC device 125 includes terminals 125a and 125b and a PTC device material 125c. The one side terminal 125a is connected to the interconnection pattern 121 b, and the other side terminal 125b is connected to the interconnection pattern 121c. Moreover, although not shown, the interconnection pattern 121d may be electrically connected to an external terminal (e.g., a negative terminal). The internal terminal 124 may be integrally formed with the interconnection pattern 121 b. Also, a plating layer is thickly coated on the interconnection pattern 121 b to form the internal terminal 124.

By the above-desaibed structure, the heat generated in the cell tab 113 and the internal terminal 124 may be transferred to the PTC device 125 through the interconnection pattern 121b. However, since the interconnection pattern 121 b has a thin thickness, a large amount of heat is not effectively transferred through the interconnection pattern 121b when compared to the heat transfer member 160. Thus, the interconnection pattern 121 b may have a relatively thick thickness to improve heat transfer efficiency through the interconnection pattern 121 b.

The heat is transferred to the PTC device 125 through three paths. Firstly, the heat is transferred to the PTC device 125 from the battery cell 110 through the planar part 131 of the frame case. Secondly, the heat is transferred to the PTC device 125 from the cell tab 113 and the internal terminal 124 through the interconnection pattern 121 b. Thirdly, the heat is transferred to the PTC device 125 from the cell tab 113 and the internal terminal 124 through the heat transfer member 160.

Among these, when the heat is transferred through the heat transfer member 160, heat transfer efficiency is the most excellent Next, when the heat is transferred through the interconnection pattern 121b and the planar part 131 of the frame case, heat transfer efficiency is excellent.

The heat transfer member 160 may indude any member having electrical insulation and thermal conductivity. For example, the heat transfer member 160 may indude a thermally conductive acrylic foam tape induding ceramic particles, pressure sensitive acrylics, and flame retardants, but is not limited thereto. Also, the heat transfer member 160 may include a heat conductive part 161 and an adhesion part 162. That is, since the heat conductive part 161 does not have an adhesion property, the thin adhesion part 162 may be disposed on a surface of the heat conductive part 161. The adhesion part 162 may be disposed on one surface or both side surfaces of the heat conductive part 161. That is, the heat transfer member 160 may have double-sided adhesive tape shape in which the adhesion parts 162 are disposed on the both side surfaces of the heat conductive part 161. If some technology is developed later on to allow the heat conductive part 161 to have an adhesion property, a separate adhesion part 162 may not be disposed on the surface of the heat conducive part 161.

Referring to FIG. 4B, the adhesion part 162 is disposed on only one surface of the heat conductive part 161 to provide the heat transfer member 160 attached to the cell tab 113 and the PTC device 125.

Additionally, an adiabatic insulating part 163 by which heat is not well dissipated is further disposed on the heat transfer member 160. The adiabatic insulating part 163 prevents heat from being dissipated to the outside after the heat is absorbed from the cell tab 113 into the heat conductive part 161. Thus, the heat absorbed through the cell tab 113 is stayed in the heat conductive part 161 for a long time to further improve thermal conductivity at the PTC device 125. The adiabatic insulating part 163 may be formed of a material having thermal conductivity of about 0.03 W/m-k to about 0.06 W/m-k. For example, the adiabatic insulating part 163 may be formed of a material selected from the group consisting of a foam polystyrene thermal insulation material, an extruded foam polystyrene board, a thermal insulation material made of glass wool, a thermal insulation material made of rock wool, a foam polyethylene thermal insulation material, a polyurethane foam, a vermiculite, a perlite (pearl stone), and equivalents thereof, but is not limited thereto. In addition, when it is intended to effectively transfer the heat transferred from the battery cell 110 through the planar part 131 to the heat transfer member 160, the adiabatic insulating part 163 may be omitted. Also, the adiabatic insulating part 163 may be omitted in the following description.

The heat transfer member 160 may indude the heat conductive part 161 and the adhesion part 162. One of commercial models of Korean company Samdo Ind.: SD-AT090, SD-AT040C, SD-AT045, STC-2400, and STC-2250 may be used as the heat transfer member 160. For example, physical properties of STC-2250 are as follows.

| Color | Thickness | Tensile Strength | Elongation | Initial Adhesive Strength | Normal Adhesive Strength | *HRC | Heat Conductivity |
|---|---|---|---|---|---|---|---|
| | mm | kg/cm² | % | g/cm | g/cm | °C | W/m-K |
| White | 025 | 12.4 | 260 | 375 | 650 | ≥110 | 0.8 |

| | | | | | | | |
|---|---|---|---|---|---|---|---|
| * HRC: Heat Creep Resistance | | | | | | | |

In Table, the initial adhesive strength was measured by a 180-degree pulling separation method based on KSA 1529 (Korean industrial standards).
- Wait time: 30 minutes
- Measurement Speed: 300 mm/min
- Measurement Width: 10 mm

The normal adhesive strength was measured by the same method except that the wait time was one day (24 hours).

The HCR was measured by attaching a 25 mm x 25 mm sample to a SUS (stainless steel plane), suspending a 500-g weight from the sample, and increasing the temperature at a rate of 10°C/20 minutes. Then, when the weight falls down, the temperature or slipping distance was measured.

As shown above, the heat transfer member 160 has high heat conductivity (K>0.8 W/m-K), low heat resistance, uniform heat distribution property (temperature uniformity), and high mechanical strength (shear, tensile strength) at high temperatures. In addition, the adhesive strength of the heat transfer member 160 may be well maintained at high temperatures.

Therefore, when the cell tab 113 and the internal terminals 124 are overheated due to an overcurrent, heat may be quickly transferred to the PTC device 125 through the heat transfer member 160 of which the mechanical strength and adhesive strength are not reduced at high temperatures. That is, the heat transfer member 160 may be applied to the battery pack according to an embodiment.

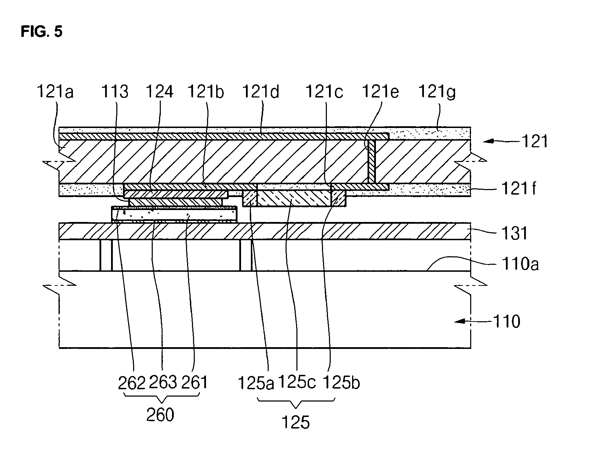

FIG. 5 illustrates a sectional view of an attachment state of a heat transfer member according to another embodiment.

Referring to Fig. 5, according to the current embodiment, a heat transfer member 260 may be attached to only a cell tab 113. That is, the heat transfer member 260 constituted by an adhesion part 262, a heat conductive part 261, and an adiabatic insulating part 263 is attached to only the cell tab 113.

In detail, the adhesion part 262 is attached to only the cell tab 113, and the heat conductive part 261 is disposed on the surface of the adhesion part 262. The adiabatic insulating part 263 is disposed on the heat conductive part 261. Therefore, in practical, although the heat transfer member 260 absorbs heat from the cell tab 113, the heat is not well dissipated to the outside. As a result heat generated at the cell tab 113 is transferred to a PTC device 125 mainly through an interconnection pattern 121b. That is, since the heat transfer member 260 does not directly connect the cell tab 113 and the PTC device 125 at the same time, heat accumulated in the heat transfer member 260 is transferred to the PTC device 125 through the interconnection pattern 121 b that electrically connects the cell tab 113 to the PTC device 125.

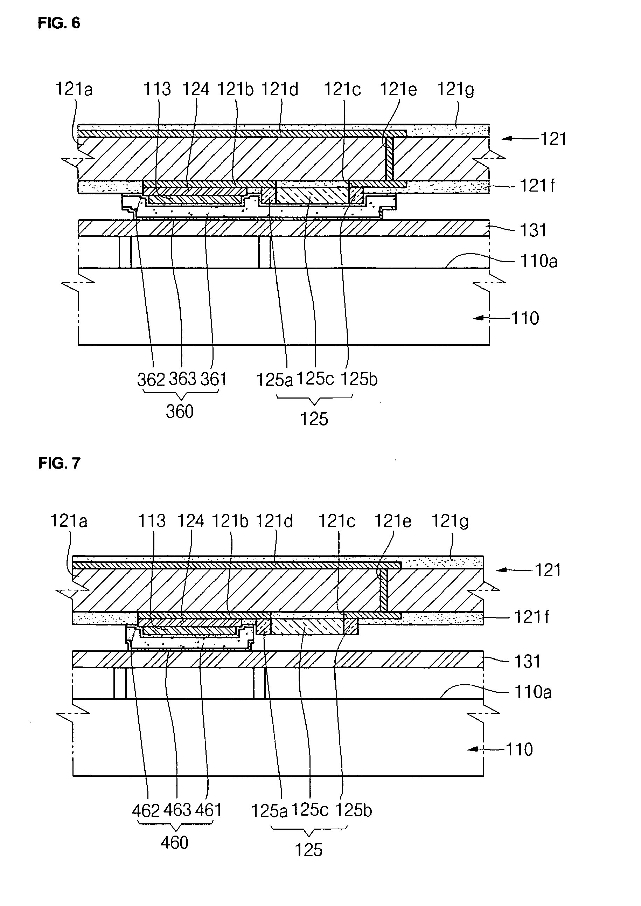

FIG. 6 illustrates a sectional view of an attachment state of a heat transfer member according to another embodiment.

Referring to Fig. 6, according to the current embodiment, a heat transfer member 360 completely covers a cell tab 113, an internal terminal 124 and a PTC device 125. In addition, the heat transfer member 360 covers a portion of a circuit board 121 corresponding to an outer circumference of the cell tab 113, the internal terminal 124 and the PTC device 125.

In more detail, an adhesion part 362 is attached to the cell tab 113, the internal terminal 124 and the PTC device 125, and the outer circumference of the circuit board 121 thereof. A heat conductive part 361 is disposed on the adhesion part 362. An adiabatic insulating part 363 is disposed on the heat conductive part 361. In this way, the outer circumference of the circuit board 121, as well as the surfaces of the cell tab 113, the internal terminal 124 and the PTC device 125, is completely covered with the adhesion part 362, the heat conductive part 361, and the adiabatic insulating part 363.

Therefore, heat transfer from the cell tab 113 to the PTC device 125 may be efficiency performed through the heat conducive part 361, and heat is not dissipated from the heat conductive part 361 to the outside area owning to the adiabatic insulating part 363. Therefore, the PTC device 125 may be sensitively operated in response to heat generated from the cell tab 113. When the surfaces of the cell tab 113 and the PTC device 125 are substantially covered with the heat transfer member 360, the heat transfer efficiency of the heat transfer member 360 may be optimal.

FIG. 7 illustrates a sectional view of an attachment state of a heat transfer member according to another embodiment

Referring to FIG. 7, a heat transfer member 460 completely covers only a cell tab 113 and an internal terminal 124. Also, the heat transfer member 460 covers a portion of a circuit board 121, i.e., an outer circumference of the cell tab 113 and the internal terminal 124.

In detail, an adhesion part 462 is attached to the cell tab 113, the internal terminal 124 and the circuit board corresponding to the outer circumference of the cell tab 113 and internal terminal 124. Also, a heat conductive part 461 is disposed on the adhesion part 462. An adiabatic insulating part 463 is disposed on the heat conductive part 461. Thus, heat generated in the cell tab 113 is absorbed through the heat conductive part 461 and is not dissipated by the adiabatic insulating part 463 to the outside. Therefore, the heat generated from the cell tab 113 is mainly quickly transferred to a PTC device 125 through an interconnection pattern 121b.

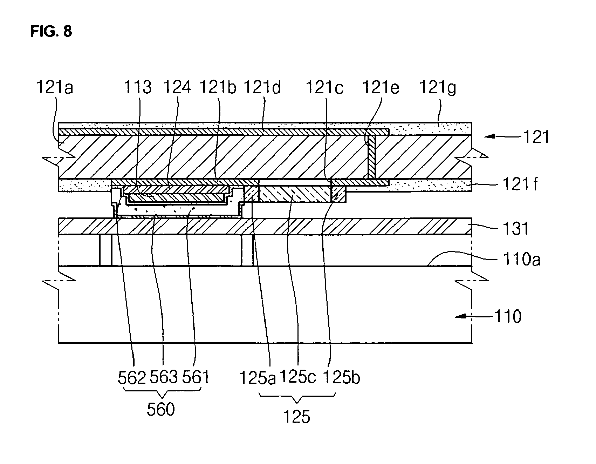

FIG. 8 illustrates a sectional view of an attachment state of a heat transfer member according to another embodiment.

Referring to FIG. 8, a heat transfer member 560 covers a cell tab 113, an internal terminal 124 and an interconnection pattern 121 b disposed outside the internal terminal 124.

In detail, a protection layers 121f does not cover the interconnection pattern 121b corresponding to the outside of the internal terminal 124. Therefore, the interconnection pattern 121 b is exposed to outside. An adhesion part 562 of the heat transfer member 560 is attached to the cell tab 113, the internal terminal 124 and the interconnection pattern 121b. Also, a heat conductive part 561 is disposed on the adhesion part 562. An adiabatic insulating part 563 is disposed on the heat conductive part 561.

Thus, heat generated in the cell tab 113 is rapidly transferred to the interconnection pattern 121 b through the heat transfer member 560, and the heat is rapidly transferred to a PTC device 125 through an interconnection pattern 121 b.

## Claims

1. A battery pack (100), comprising:
a battery cell (110) induding a cell tab (113), and
a protective circuit module (120) induding an internal terminal (124) coupled to the cell tab (113) and
a positive temperature coefficient (PTC) device (125) coupled to the internal terminal (124),
**characterized in that**
the protective circuit module (120) further indudes a heat transfer member (160) consisting in parts or totally of a thermal but not electrically conductive material and being coupled to the cell tab (113) and the PTC device (125), wherein the heat transfer member (160) is covered by an adiabatic insulating part (163).

2. The battery pack of claim 1, wherein the heat transfer member (160) is a thermally conductive tape.

3. The battery pack of claim 2, wherein the heat transfer member (160) is a thermally conductive adhesive tape.

4. The battery pack of any of daims 2 or 3, wherein the heat transfer member (160) comprises ceramic particles, pressure sensitive acrylics, and/or a flame retardant

5. The battery pack of any of daims 2 through 4, wherein the heat transfer member (160) comprises:
a heat conductive layer,
a first adhesive layer disposed between the heat conductive layer and the cell tab (113); and
a second adhesive layer disposed on the heat conductive layer on a side opposite the first adhesive layer.

6. The battery pack of any of the preceding claims, wherein the internal terminal (124) extends beyond the edges of the cell tab (113), and the heat transfer member (460) contacts the cell tab (113), the internal terminal (124), and a protection layer (121f) of the protective circuit module (120).

7. The battery pack of any of daims 1 through 5, wherein the heat transfer member (360) contacts the cell tab (113), the internal terminal (124), the PTC device (125), and a protection layer (121f) of the protective circuit module (120).

8. The battery pack of any of daims 1 through 5, wherein the heat transfer member (560) contacts an interconnection pattern (121 b) of the protective circuit module (120) adjacent to the internal terminal (124), the cell tab (113) and the PTC device (125).

9. The battery pack of any of claims 1 through 5, wherein the internal terminal (124) extends beyond at least an edge of the cell tab (113), and the heat transfer member (160) contacts the cell tab (113), the internal terminal (124), the PTC device (125), and an interconnection pattern (121b) of the protective circuit module (120) adjacent to the cell tab (113), the internal terminal (124), and the PTC device (125).

10. The battery pack of any of the preceding claims, wherein the battery pack (100) further indudes a frame case (130) being formed of a resin and surrounding the battery cell (110).

11. The battery pack of claim 10, wherein the frame case (130) is being coupled to the protective circuit module (120) such that there remains a space between the protective circuit board (120) and the frame case (130), wherein the internal terminal (124), the cell tab (113), the PTC device (125) and the heat transfer member (160) are provided within the space.

12. The battery pack of any of the preceding claims, wherein the protective circuit module (120) transfers heat from the battery cell (110) to the PTC device (125).

## Patentansprüche

1. Batteriepack (100), aufweisend:
eine Batteriezelle (110), die eine Zellfahne (113) aufweist, und
ein Schutzschaltungsmodul (120), das einen inneren Anschluss (124), der mit der Zellfahne (113) gekoppelt ist, und eine positive Temperaturkoeffizient (PTC)-Vorrichtung (125), die mit dem inneren Anschluss (124) gekoppelt ist, aufweist,
**dadurch gekennzeichnet, dass**
das Schutzschaltungsmodul (120) weiterhin ein Wärmeübertragungselement (160) aufweist, das teilweise oder vollständig aus einem thermischen, aber nicht elektrisch leitenden Material besteht und mit der Zellfahne (113) und der PTC-Vorrichtung (125) gekoppelt ist, wobei das Wärmeübertragungselement (160) von einem adiabatischen Isolierteil (163) bedeckt wird.

2. Batteriepack nach Anspruch 1, wobei das Wärmeübertragungselement (160) ein thermisch leitendes Band ist.

3. Batteriepack nach Anspruch 2, wobei das Wärmeübertragungselement (160) ein thermisch leitendes Klebeband ist.

4. Batteriepack nach einem der Ansprüche 2 oder 3, wobei das Wärmeübertragungselement (160) Keramikpartikel, druckempfindliche Acryle und/oder ein Flammschutzmittel aufweist.

5. Batteriepack nach einem der Ansprüche 2 bis 4, wobei das Wärmeübertragungselement (160) aufweist:
eine wärmeleitende Schicht;
eine erste Klebeschicht, die zwischen der wärmeleitenden Schicht und der Zellfahne (113) angeordnet ist; und
eine zweite Klebeschicht, die auf der wärmeleitenden Schicht auf einer der ersten Klebeschicht gegenüberliegenden Seite angeordnet ist.

6. Batteriepack nach einem der vorhergehenden Ansprüche, wobei sich der innere Anschluss (124) über die Ränder der Zellfahne (113) hinaus erstreckt und das Wärmeübertragungselement (460) mit der Zellfahne (113), dem inneren Anschluss (124) und einer Schutzschicht (121f) des Schutzschaltungsmoduls (120) in Kontakt steht.

7. Batteriepack nach einem der Ansprüche 1 bis 5, wobei das Wärmeübertragungselement (360) mit der Zellfahne (113), dem inneren Anschluss (124), der PTC-Vorrichtung (125) und einer Schutzschicht (121f) des Schutzschaltungsmoduls (120) in Kontakt steht.

8. Batteriepack nach einem der Ansprüche 1 bis 5, wobei das Wärmeübertragungselement (560) mit einem Verbindungsmuster (121b) des Schutzschaltungsmoduls (120), das benachbart zum inneren Anschluss (124), zur Zellfahne (113) und zur PTC-Vorrichtung (125) ist, in Kontakt steht.

9. Batteriepack nach einem der Ansprüche 1 bis 5, wobei sich der innere Anschluss (124) über zumindest einen Rand der Zellfahne (113) hinaus erstreckt und das Wärmeübertragungselement (160) mit der Zellfahne (113), dem inneren Anschluss (124), der PTC-Vorrichtung (125) und einem Verbindungsmuster (121b) des Schutzschaltungsmoduls (120), das benachbart zur Zellfahne (113), zum inneren Anschluss (124) und zur PTC-Vorrichtung (125) ist, in Kontakt steht.

10. Batteriepack nach einem der vorhergehenden Ansprüche, wobei der Batteriepack (100) weiterhin ein Rahmengehäuse (130) aufweist, das aus einem Harz ausgebildet ist und die Batteriezelle (110) umgibt.

11. Batteriepack nach Anspruch 10, wobei das Rahmengehäuse (130) derart mit dem Schutzschaltungsmodul (120) gekoppelt ist, dass ein Zwischenraum zwischen der Schutzschalttafel (120) und dem Rahmengehäuse (130) bleibt, wobei der innere Anschluss (124), die Zellfahne (113), die PTC-Vorrichtung (125) und das Wärmeübertragungselement (160) in dem Zwischenraum bereitgestellt werden.

12. Batteriepack nach einem der vorhergehenden Ansprüche, wobei das Schutzschaltungsmodul (120) Wärme von der Batteriezelle (110) zur PTC-Vorrichtung (125) überträgt.

## Revendications

1. Bloc de piles (100), comprenant :
une pile (110) comportant une languette de pile (113),
et
un module de circuit de protection (120) comportant une borne intérieure (124) couplée à la languette de pile (113) et un dispositif (125) à coefficient de température positif (CPT) couplé à la borne intérieure (124), **caractérisé en ce que**
le module de circuit de protection (120) comporte en outre un élément de transfert de chaleur (160) constitué en partie ou totalement par un matériau conducteur de chaleur mais sans être électriquement conducteur et couplé à la languette de pile (113) et au dispositif CPT (125), où l'élément de transfert de chaleur (160) est couvert par une partie isolante adiabatique (163).

2. Bloc de piles de la revendication 1, où l'élément de transfert de chaleur (160) est une bande thermiquement conductrice.

3. Bloc de piles de la revendication 2, où l'élément de transfert de chaleur (160) est une bande adhésive thermiquement conductrice

4. Bloc de piles de l'une quelconque des revendications 2 et 3, où l'élément de transfert de chaleur (160) comprend des particules de céramique, des acryliques sensibles à la pression et/ou un retardateur de flamme.

5. Bloc de piles de l'une des revendications 2 à 4, où l'élément de transfert de chaleur (160) comprend :
une couche conductrice de chaleur ;
une première couche adhésive disposée entre la couche conductrice de chaleur et la languette de pile (113) ; et
une deuxième couche adhésive disposée sur la couche conductrice de chaleur sur un côté opposé de la première couche adhésive.

6. Bloc de piles de l'une quelconque des revendications précédentes, où la borne intérieure (124) s'étend au-delà des bords de la languette de pile (113), et l'élément de transfert de chaleur (460) touche la languette de pile (113), la borne intérieure (124) et une couche de protection (121f) du module de circuit de protection (120).

7. Bloc de piles de l'une quelconque des revendications 1 à 5, où l'élément de transfert de chaleur (360) touche la languette de pile (113), la borne intérieure (124), le dispositif CPT (125) et une couche de protection (121f) du module de circuit de protection (120).

8. Bloc de piles de l'une quelconque des revendications 1 à 5, où l'élément de transfert de chaleur (560) touche un motif d'interconnexion (121b) du module de circuit de protection (120) adjacent à la borne intérieure (124), à la languette de pile (113) et au dispositif CPT (125).

9. Bloc de piles de l'une quelconque des revendications 1 à 5, où la borne intérieure (124) s'étend au-delà d'au moins un bord de la languette de pile (113), et l'élément de transfert de chaleur (160) touche la languette de pile (113), la borne intérieure (124), le dispositif CPT (125) et un motif d'interconnexion (121b) du module de circuit de protection (120) adjacent à la languette de pile (113), à la borne intérieure (124) et au dispositif CPT (125) .

10. Bloc de piles de l'une quelconque des revendications précédentes, où le bloc de piles (100) comporte en outre un boîtier à armature (130) constitué de résine et entourant la pile (110).

11. Bloc de piles de la revendication 10, où le boîtier à armature (130) est couplé au module de protection de circuit (120) de sorte à laisser un espace entre la carte de circuit de protection (120) et le boîtier à armature (130), où les bornes intérieures (124), la languette de pile (113), le dispositif CPT (125) et l'élément de transfert de chaleur (160) sont pourvus dans l'espace.

12. Bloc de piles de l'une quelconque des revendications précédentes, où le module de circuit de protection (120) transfère la chaleur de la pile (110) au dispositif CPT (125).
